# EUROPÄISCHE PATENTANMELDUNG

(11) **EP 1 978 313 A2**
(43) Veröffentlichungstag der Anmeldung: **08.10.2008**
(21) Anmeldenummer: 08005376.2
(22) Anmeldetag: 20.03.2008
(51) Int. Cl.: F24J 2/54, H01L 31/042

(54) **Solaranlage**

(30) Priorität: 26.03.2007 DE 102007014913
(71) Anmelder: IDEEMATEC Deutschland GmbH, 94574 Wallerfing (DE)
(72) Erfinder: Kufner, Johann, 94527 Aholming (DE)
(74) Vertreter: Grünberg, Thomas

(57) **Zusammenfassung**

Die vorliegende Erfindung betrifft eine Solaranlage (1), umfassend eine Mehrzahl von länglich ausgebildeten Moduleinheiten (2) mit jeweils mindestens einem Solarmodul (3), wobei die einzelnen Moduleinheiten dem Sonnenverlauf nachführbar sind.

Die vorliegende Erfindung betrifft ferner eine Solarmoduleinheit (2).

Die vorliegende Erfindung betrifft ferner ein Verfahren zum Anordnen von Solarmoduleinheiten (2).

## Beschreibung

Die vorliegende Erfindung betrifft eine Solaranlage mit einer Mehrzahl von Moduleinheiten, welche in der Regel mehrere Solarmodule aufweisen.

Aus dem Stand der Technik sind Solaranlagen seit langem bekannt. Bei den meisten Solaranlagen werden die Solarmodule auf Dächern und Freiflächen installiert. Bei Dachanlagen ist beispielsweise eine Ausrichtung gegen Süden bevorzugt. Meist sind die Solarmodule in einem bestimmten Winkel zum Boden ausgerichtet (so genannter Anstellwinkel). Häufig werden die Solarmodule in Reihen nebeneinander zu Solarmoduleinheiten angeordnet.

Der Nachteil dieser Solaranlagen besteht beispielsweise darin, dass es zu einer Verschattung der hintereinander liegenden Modulreihen kommt, falls diese nicht in ausreichendem Abstand voneinander angeordnet sind.

Ferner sind Solaranlagen mit annähernd quadratisch ausgebildeten Moduleinheiten bekannt, die dem Sonnenverlauf nachführbar sind und hierzu häufig auf ein Antriebselement gesetzt werden. Dadurch können die Solarmoduleinheiten zum Teil zweiachsig der Sonne nachgeführt werden. Dies bringt in mitteleuropäischer Lage einen Mehrertrag an Energie von ca. 30 %, in südlichen Ländern ca. 40 %. Durch das Nachführen der Solarmoduleinheiten der Sonne müssen weiträumige Abstände kreisförmig um die Solarmoduleinheiten eingehalten werden, um gegenseitige Verschattungen zu verhindern. Hierfür ist ein großer Platzbedarf von Nöten. Die einzelnen Solarmoduleinheiten sind weit voneinander entfernt angeordnet.
Neben dem großen Platzbedarf dieser Anlagen sind diese auch sehr windanfällig, da die einzelnen Solarmoduleinheiten ungeschützt und frei im Gelände stehen.

Eine andere bekannte Variante der Nachführung von Solarmodulen der Sonne ist die Anordnung der Modulreihen auf großen Drehtellern. Diese werden in einem Durchmesser von bis zu 30 Metern auf eine Gleisbahn gestellt. Der Aufwand und somit die Kosten liegen für solche Anlagen sehr hoch. Allein der Aufwand, das Gelände flächig einzuebnen, um diesen Drehteller auf ein stabiles Fundament zu setzen, ist groß. Die runde Form führt ebenfalls wieder zu einer ungünstigen Flächenausnutzung.

Der vorliegenden Erfindung liegt die Aufgabe zugrunde, eine Solaranlage zur Verfügung zu stellen, welche die Nachteile des Standes der Technik überwindet. Ihr liegt insbesondere die Aufgabe zugrunde, eine Solaranlage zur Verfügung zu stellen, welche bei geringstem Platzbedarf auch bei unebenem Gelände mit hoher Energieeffizienz arbeitet.

Diese Aufgabe wird durch eine Solaranlage gelöst, umfassend eine Mehrzahl von länglich ausgebildeten Moduleinheiten mit jeweils mindestens einem Solarmodul, wobei die einzelnen Moduleinheiten dem Sonnenverlauf nachführbar sind.
Durch die längliche Form der Moduleinheiten der erfindungsgemäßen Solaranlage, welche einzeln dem Sonnenverlauf nachführbar sind, ist es möglich, auf sehr geringem Raum eine Vielzahl von Moduleinheiten zu platzieren, welche sich nicht oder nur geringfügig gegenseitig verschatten.

Bei einer besonders bevorzugten Ausführungsform der erfindungsgemäßen Solaranlage sind die Moduleinheiten im Wesentlichen rechteckig ausgebildet. Durch die rechteckige Form ist ein besonders Platz sparendes Anordnen der Moduleinheiten der erfindungsgemäßen Solaranlage möglich.

Die Moduleinheiten der erfindungsgemäßen Solaranlage weisen in der Regel ein Verhältnis von Breite zu Länge im Bereich von ca. 1 : 1,5 bis 1 : 10, vorzugsweise ca. 1 : 2 bis 1 : 5, besonders bevorzugt von ca. 1 : 3, auf.

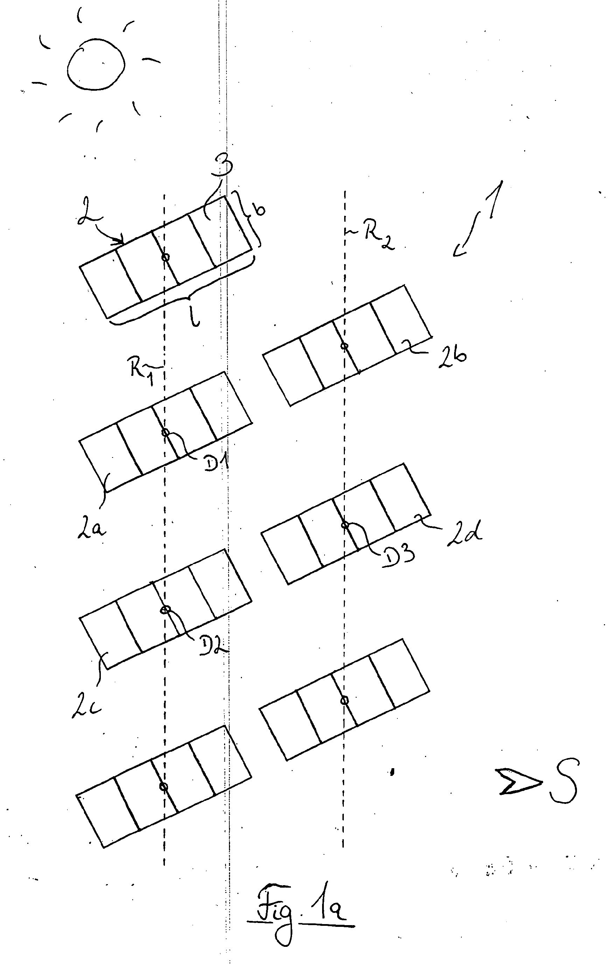

Bei einer besonders bevorzugten Ausführungsform der erfindungsgemäßen Solaranlage sind die Moduleinheiten in mindestens zwei, vorzugsweise mehreren, im Wesentlichen parallelen Reihen, jeweils gebildet durch eine Gerade, auf welcher die Mittelpunkte bzw. Drehpunkte der einzelnen Modulelement im Wesentlichen liegen, angeordnet, wobei die einzelnen Moduleinheiten zweier benachbarter Reihen vorzugsweise versetzt angeordnet sind, insbesondere in der Weise, dass die Mittelpunkte zweier benachbarter Moduleinheiten einer Reihe mit einem Mittelpunkt einer Moduleinheit einer benachbarten Reihe ein im Wesentlichen gleichschenkliges Dreieck bilden.
Durch diese Anordnung bilden sich im Tagesverlauf beim Nachführen der Moduleinheiten im Sonnenverlauf ständig neue, parallel angeordnete Moduleinheitsreihen (siehe hierzu auch Figuren 1a - 1f der Figurenbeschreibung), wobei die sich bildenden Reihen immer einen derartigen Abstand zueinander aufweisen, dass es kaum oder nicht zu einer gegenseitigen Verschattung der Moduleinheiten der hintereinander liegenden Reihen kommen kann. Dadurch ist es möglich, auf besonders Platz sparende Art und Weise eine Solaranlage zu installieren, welche mit besonders hoher Energieeffizienz arbeitet.

Mit Vorteil ist die Länge einer Moduleinheit einer erfindungsgemäßen Solaranlage geringer, vorzugsweise um ca. 10 % bis 20 % geringer, als der Abstand zwischen den Mittelpunkten zweier benachbarter Moduleinheiten einer Reihe. Durch diese Anordnung wird ein gegenseitiges Berühren der Moduleinheiten bei der Sonnen-Nachführbewegung vermieden. Bei dieser Anordnung liegt der Platzbedarf je KW bei ca. 50% niedriger.

Mit Vorteil entspricht der Abstand zwischen den Mittelpunkten zweier benachbarter Moduleinheiten einer Reihe in etwa dem Abstand zwischen zwei benachbarten Reihen.

Vorzugsweise sind die einzelnen Modulelemente der Sonne im Wesentlichen gleichmäßig nachführbar und sind zu diesem Zweck vorzugsweise miteinander gekoppelt. Durch diese Anordnung wird erreicht, dass nicht jedes Modulelement einzeln an den Sonnenverlauf angepasst werden muss, sondern dass eine zentrale Steuerung möglich ist.

Vorzugsweise sind die Moduleinheiten der erfindungsgemäßen Solaranlage derart aufgestellt, dass sie mit einer Waagrechten (z.B. mit einem ebenen Boden oder Grund) einen Winkel von ca. 20° bis ca. 80°, vorzugsweise von ca. 30° bis ca. 45°, besonders bevorzugt von ca. 35° bis 40°, einschließen. In mitteleuropäischen Lagen ist ein Winkel von ca. 38° bevorzugt. Mit diesem Anstellwinkel ist die effektivste Sonnenausnutzung zu erreichen.
Bei der Nachführung ist nicht nur eine einachsige Nachführung möglich. Es ist durchaus auch eine zweiachsige Nachführung denkbar, welche mechanisch oder automatisch einstellbar ist. Dadurch ist der Anstellwinkel an unterschiedliche Tageszeiten anpassbar.

Mit Vorteil wird bei der erfindungsgemäßen Solaranlage eine Bauhöhe von 2,5 m nicht überschritten. Dadurch wird eine hohe Widerstandsfähigkeit bei Windbelastungen erreicht. Andererseits wird in der Regel eine Bodenfreiheit von ca. 1 m eingehalten. Dadurch ist beispielsweise Nutztierhaltung (z.B. Schafhaltung) auf der Fläche der Solaranlage möglich.

Mit Vorteil sind benachbarte Solarmodule einer Moduleinheit der erfindungsgemä-βen Solaranlage mit Abstand zueinander angeordnet. Eine derartige Anordnung trägt ebenfalls zur Windstabilität der Moduleinheiten bei, da hier die Wind- und Soglasten wesentlich günstiger aufgenommen werden können und Luftverwirbelungen entstehen. Dadurch lässt sich zudem die Moduleinheitslänge vorteilhaft ausfüllen.

Die vorliegende Erfindung betrifft ferner eine Solarmoduleinheit, welche dadurch gekennzeichnet ist, dass sie länglich ausgebildet ist und der Sonne nachführbar ist. Eine derartige Solarmoduleinheit eignet sich hervorragend für die Montage einer Solaranlage nach einem der Ansprüche 1 - 10.

Vorzugsweise ist die erfindungsgemäße Solarmoduleinheit im Wesentlichen rechteckig ausgebildet.

Vorzugsweise weist die erfindungsgemäße Solarmoduleinheit ein Verhältnis von Breite zu Länge im Bereich von ca. 1 : 1,5 bis 1 : 10, vorzugsweise ca. 1 : 2 bis 1 : 5, besonders bevorzugt von ca. 1:3, auf.

Die vorliegende Erfindung betrifft ferner ein Verfahren zum Anordnen von Solarmoduleinheiten, insbesondere von erfindungsgemäßen Solarmoduleinheiten, zur Installierung einer Solaranlage, insbesondere einer erfindungsgemäßen Solaranlage, umfassend folgenden Arbeitsschritt:
Positionieren der Drehachsen der einzelnen Moduleinheiten in mindestens 2 im Wesentlichen parallele Reihen, wobei die Drehachsen der Moduleinheiten zweier benachbarter Reihen derart versetzt angeordnet werden, dass zwei benachbarte Drehachsen einer Reihe mit einer Drehachse einer nächstgelegenen Moduleinheit der anderen Reihe ein im Wesentlichen gleichschenkliges Dreieck bilden, wobei die Abstände der Modulelemente untereinander so gewählt werden, dass ein Berühren der Moduleinheiten beim Drehen um die Drehachsen ausgeschlossen ist, wobei die Moduleinheiten so aufgestellt werden, dass sie mit einer Waagrechten einen spitzen Winkel, vorzugsweise einen Winkel von ca. 35° - 42°, einschließen, wobei der Abstand der Reihen so gewählt wird, dass eine gegenseitige Verschattung der Solarmodule im Tagesverlauf im Wesentlichen vermieden wird, und wobei die einzelnen Moduleinheiten im Wesentlichen gleichmäßig dem Sonnenverlauf nachgeführt werden.

Durch das erfindungsgemäße Verfahren kann eine Solaranlage installiert werden, welche unter größtmöglichster Platzausnutzung höchst effektiv arbeitet.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1 a-f:: einen Ausschnitt aus einer erfindungsgemäßen Solaranlage im Tagesverlauf;
- Figur 2:: ein Solarmodul aus einer erfindungsgemäßen Moduleinheit.
- Figuren 1a - 1f: zeigen einen Ausschnitt aus einer erfindungsgemäßen Solaranlage 1 im Tagesverlauf.

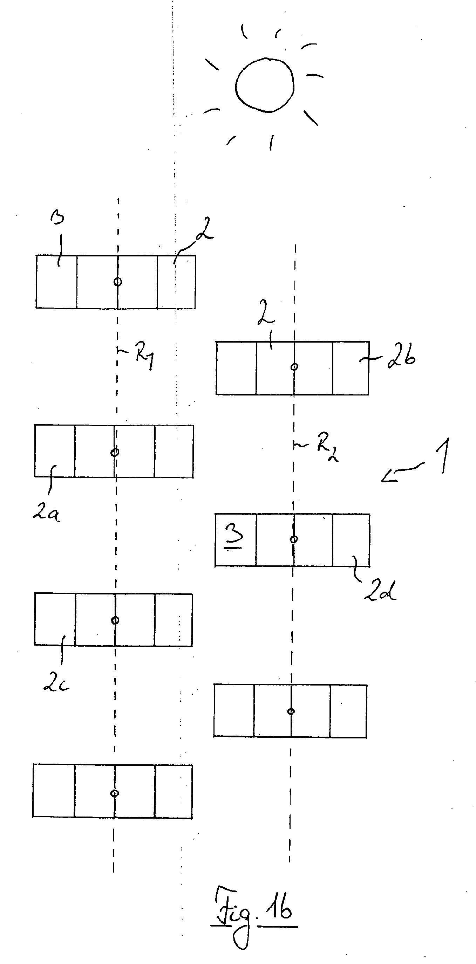

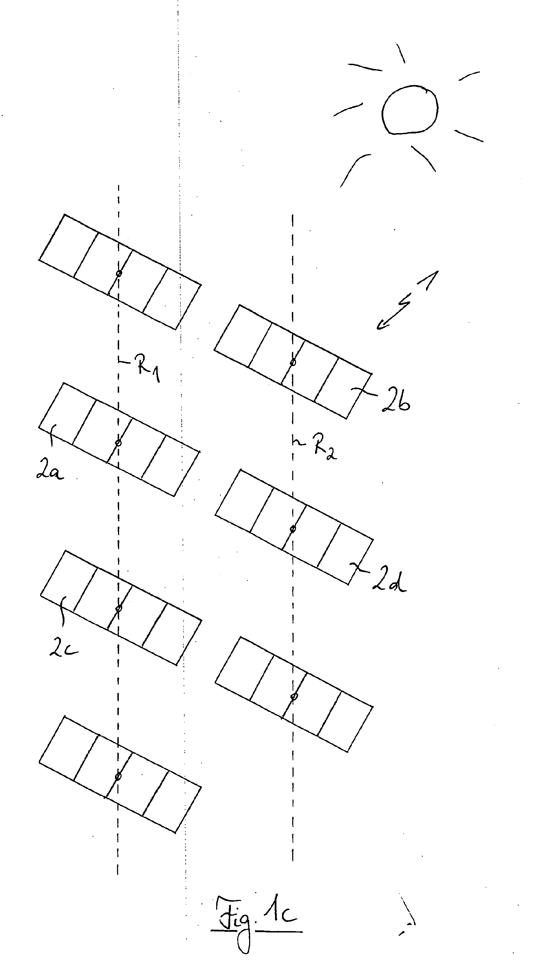

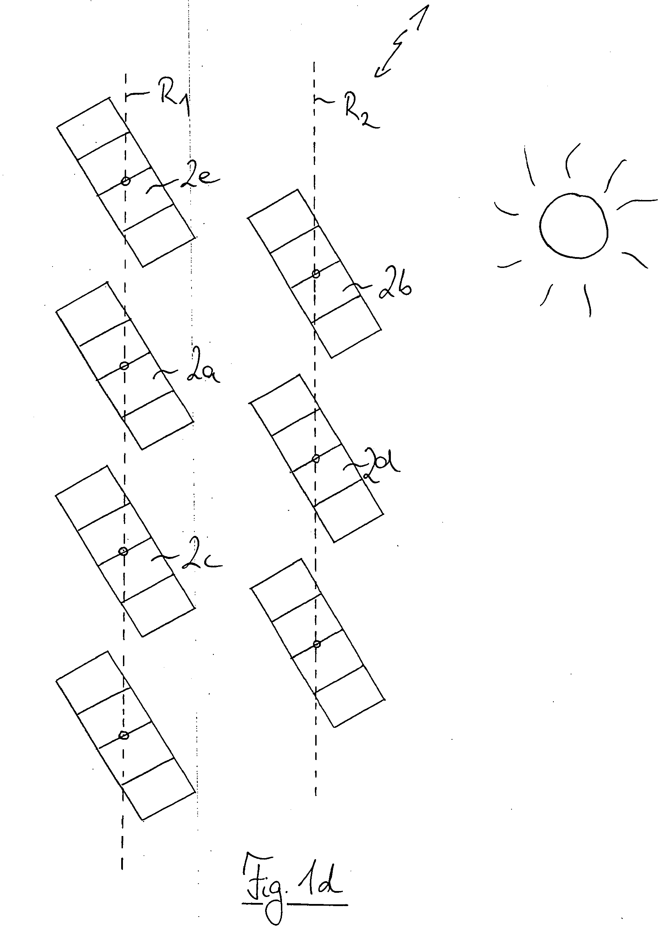

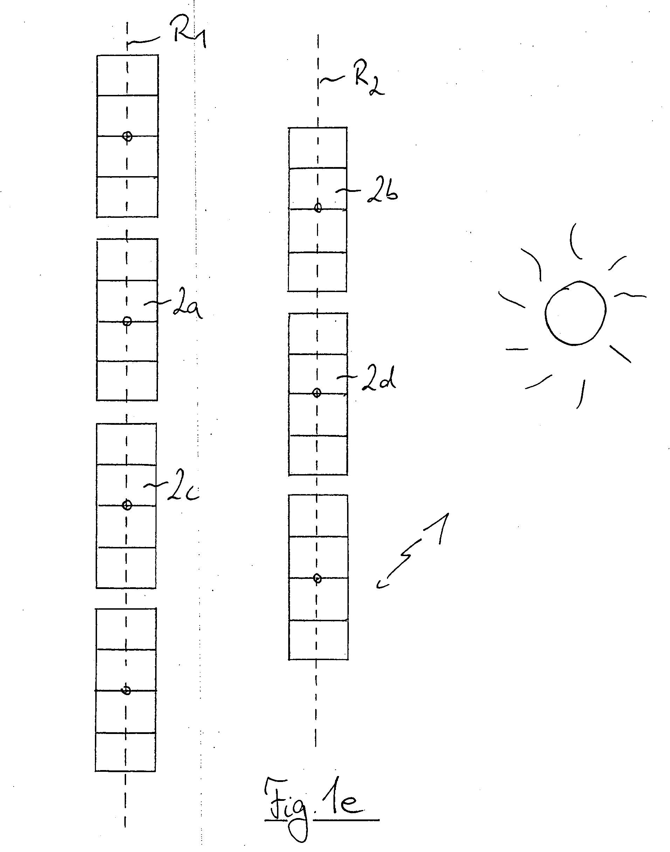

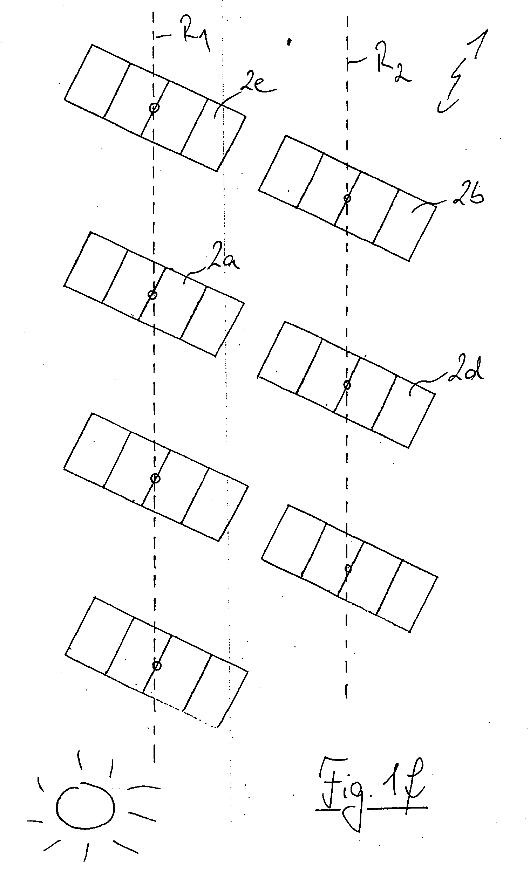

Figur 1 a zeigt einen Ausschnitt aus einer erfindungsgemäßen Solaranlage 1 am Morgen. Die Solaranlage 1 weist eine Mehrzahl von Moduleinheiten 2 auf, welche jeweils vier Solarmodule 3 aufweisen. Die Moduleinheiten 2 weisen eine rechteckige Form auf.

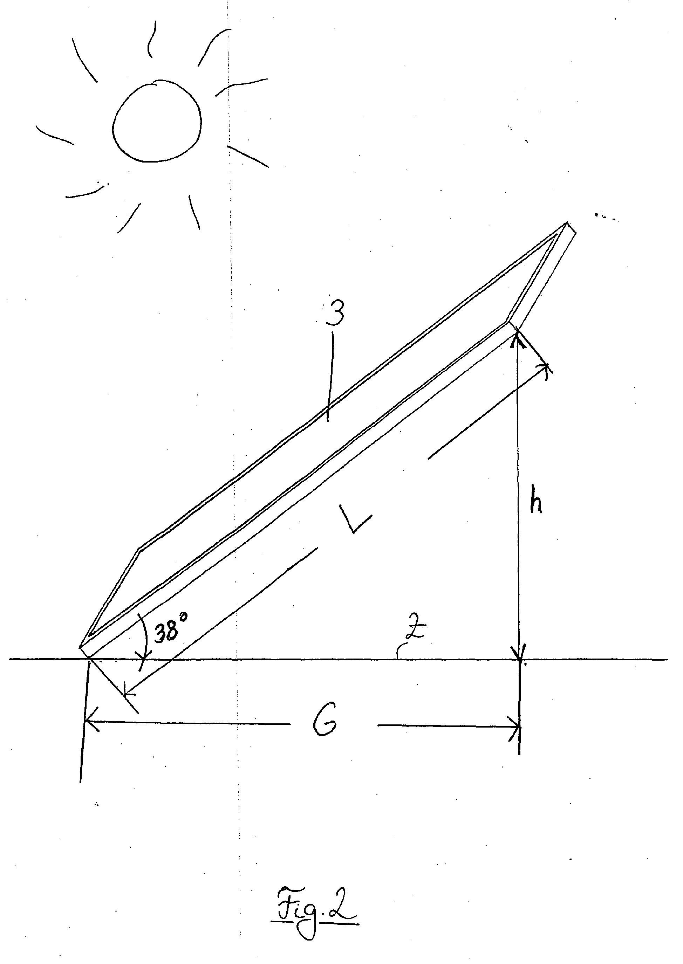

Die Moduleinheiten 2 sind mit einer Neigung zum Boden aufgestellt und schließen mit dem Boden einen Winkel von ca. 38° ein. Die Moduleinheiten sind dabei natürlich so positioniert, dass ihre Solarmodule der Sonne zugewandt sind. Diese Anordnung ist in den Figuren 1a - f nicht zu erkennen. Hierzu wird auf die Figur 2 verwiesen. Die Moduleinheiten 2 sind einzeln der Sonne nachführbar. Hierzu ist jeder Moduleinheit 2 eine Nachführeinrichtung zugeordnet. Diese einzelnen Nachführeinrichtungen können beispielsweise mittels eines Motors die Moduleinheiten 2 in eine Drehbewegung versetzen und diese so der Sonne nachführen. Diese hier nicht dargestellten Nachführeinrichturigen können untereinander gekoppelt sein, so dass eine koordinierte Nachführbewegung der einzelnen Moduleinheiten möglich ist.

Die Nachführeinrichtungen greifen bei den vorliegenden Moduleinheiten an deren Mittelpunkt (Drehpunkt D) an.

Die Moduleinheiten 2 weisen ein Verhältnis von Breite b zu Länge 1 von ca. 1 : 3 auf. Die Moduleinheiten 2 sind in mehreren im Wesentlichen parallelen Reihen angeordnet (im vorliegenden Fall sind lediglich zwei solcher Reihen R₁ und R₂ abgebildet). Die einzelnen Reihen R (in den Abbildungen gestrichelt gezeichnet) werden jeweils durch eine Gerade definiert, auf welcher die Mittelpunkte bzw. Drehpunkte der einzelnen Moduleinheiten 2 liegen. Die einzelnen Moduleinheiten 2 zweier benachbarter Reihen R sind versetzt angeordnet, und zwar in der Weise, dass die Mittelpunkte zweier benachbarter Moduleinheiten 2 einer Reihe mit einem Mittelpunkt einer Moduleinheit einer benachbarten Reihe ein im Wesentlichen gleichschenkliges Dreieck bilden. So bilden in der Figur 1a die Mittelpunkte D1 und D2 der Reihe R₁ mit dem Mittelpunkt D3 der Reihe R₂ ein gleichschenkliges Dreieck.

Die Länge einer Moduleinheit 2 ist um ca. 20 % geringer als der Abstand zwischen den Mittelpunkten zweier benachbarter Moduleinheiten 2 einer Reihe. Dadurch wird ein Berühren der einzelnen Modulreihen bei der Nachführbewegung verhindert.

Ferner entspricht der Abstand zwischen den Mittelpunkten zweier benachbarter Moduleinheiten 2 einer Reihe in etwa dem Abstand zwischen zwei benachbarten Reihen.

Zur Bestimmung des Abstandes zwischen zwei benachbarten Reihen wird auf die Ausführungen zur Figur 2 verwiesen. Die Moduleinheiten 2 zweier benachbarter Reihen bilden ihrerseits parallele Reihen nebeneinander angeordneter Modulreihen. So bilden beispielsweise die Moduleinheiten 2a und 2b, zusammen mit weiteren, hier nicht dargestellten Moduleinheiten, eine Moduleinheitsreihe. Parallel hinter dieser Moduleinheitsreihe befindet sich eine zu dieser Reihe parallele Moduleinheitsreihe aus den Moduleinheiten 2c und 2d. Die einzelnen Moduleinheiten einer Moduleinheitsreihe sind mit einem geringen Abstand zueinander angeordnet, welcher jedoch ausreichend ist, dass sich die Moduleinheiten bei der Drehbewegung nicht berühren.

Figur 1b zeigt die Solaranlade 1 am frühen Vormittag. Die einzelnen Moduleinheiten 2 sind nun so angeordnet, dass sie mit weiteren, hier nicht dargestellten, Moduleinheiten weiterer Reihen, parallele Moduleinheitsreihen bilden. Der Abstand der Moduleinheiten 2 innerhalb solcher Moduleinheitsreihen ist bei dieser Stellung größer als bei der Stellung in Figur 1a, wobei dieser Abstand größer ist als die Länge der einzelnen Moduleinheiten 2.: Sowohl in der Stellung der Figur 1 a als auch in der der Figur 1b ist der Abstand der jeweils hintereinander liegenden Moduleinheiten (z.B. Moduleinheit 2a und Moduleinheit 2c) so groß, dass eine gegenseitige Verschattung so gut wie nicht stattfindet.

Figur 3c zeigt die Solaranlage 1 im Vergleich zu Figur 1b etwa ein bis zwei Stunden später. Durch die Drehbewegungen der Moduleinheiten 2 haben sich wiederum neue Reihen von Moduleinheiten 2 gebildet. So bilden jetzt beispielsweise die Moduleinheiten 2a und 2d (zusammen mit weiteren, hier nicht dargestellten Moduleinheiten) eine Moduleinheitsreihe.

Figur 1d zeigt die Solaranlage 1, nachdem im Vergleich zu Figur 1c wiederum eine gewisse Zeit verstrichen ist (später Vormittag).
Nun liegen beispielsweise die Moduleinheiten 2e und 2b in einer Moduleinheitsreihe. Die unmittelbar hintereinander angeordneten Moduleinheiten (z.B. Moduleinheit 2b und 2a bzw. 2d und 2c) liegen wiederum weit genug auseinander, um ein gegenseitiges Verschatten zu verhindern.

Die Figur 1e zeigt die Solaranlage 1 zur Mittagszeit. Bei dieser Stellung bilden die Moduleinheiten 2 einer Reihe (z.B. R₁ oder R₂) auch eine Moduleinheitsreihe. So liegen nun beispielsweise die Moduleinheiten 2a und 2c bzw. 2b und 2d jeweils in einer Moduleinheitsreihe.

Figur 1f zeigt die Solaranlage 1 bereits in den Abendstunden. Um von der Anordnung in Figur 1a (Morgensonne) zur Anordnung in Figur 1f (Abendsonne) zu kommen, war eine Nachführung der Moduleinheiten 2 von über 200° erforderlich. Zwischen der Anordnung in Figur 1e und der Anordnung in Figur 1f liegt ein halber Tag. Innerhalb dieses halben Tages ist es selbstverständlich zu weiteren Moduleinheitsreihen - Bildungen gekommen. Bei der Anordnung in Figur 1f bilden nun beispielsweise die Moduleinheiten 2e und 2b und 2a und 2d Moduleinheitsreihen.

Die Moduleinheiten der Figuren 1a bis 1f weisen bevorzugt eine Länge von 4,5m und eine Breite von 1,6 m auf.

Figur 2 zeigt ein Solarmodul 3 aus einer Moduleinheit 2. Das Solarmodul 3 ist in einem bestimmten Anstellwinkel angeordnet. Dieser Anstellwinkel beträgt im vorliegenden Fall 38°. Durch den Anstellwinkel ergibt sich über die Länge L des Solarmoduls 4 eine entsprechende Höhe h von einer waagrechten Grundlinie Z ausgehend. Die Länge der Grundfläche unter dem Solarmodul 3 in der Draufsicht wird mit G bezeichnet. Aus der Länge L des Solarmoduls und dem Anstellwinkel ergibt sich der so genannte Verschattungsfaktor. Dieser Verschattungsfaktor entspricht dem Abstand zwischen zwei hintereinander liegenden Solarmodulen bzw. Moduleinheiten, der einzuhalten ist, um gerade noch eine gegenseitige Verschattung zu vermeiden. Dieser Verschattungsfaktor ist regional verschieden.

Will man nun den Abstand zwischen zwei Reihen (z.B. Reihe R₁ und Reihe R₂ aus den Figuren 1a bis 1f) ermitteln, so ist die Höhe h des Solarmoduls mit dem Verschattungsfaktor zu multiplizieren und dem Ergebnis die Grundlänge G hinzuzuaddieren. Entspricht die Höhe h beispielsweise 1 m und beträgt der Verschattungsfaktor 4 m und die Grundlänge G beispielsweise 1,3 m, so beträgt der Abstand zwischen zwei Reihen (z.B. R₁ und R₂) 5,3 m. Mit diesem Abstand ist gewährleistet, dass sich die im Tagesverlauf bildenden Modulelementsreihen (nicht zu verwechseln mit den Reihen der Drehpunkte, z.B. R₁ und R₂) nicht gegenseitig verschatten.

## Patentansprüche

1. Solaranlage (1), umfassend eine Mehrzahl von länglich ausgebildeten Moduleinheiten (2) mit jeweils mindestens einem Solarmodul (3), wobei die einzelnen Moduleinheiten dem Sonnenverlauf nachführbar sind.

2. Solaranlage (1) nach Anspruch 1, **dadurch gekennzeichnet, dass** die Moduleinheiten (2) im Wesentlichen rechteckig ausgebildet sind.

3. Solaranlage (1) nach einem der Ansprüche 1 oder 2, **dadurch gekennzeichnet, dass** die Moduleinheiten (2) ein Verhältnis von Breite zu Länge im Bereich von ca. 1 : 1,5 bis 1 : 10, vorzugsweise ca. 1 : 2 bis 1 : 5, besonders bevorzugt von ca. 1 : 3, aufweisen.

4. Solaranlage (1) nach einem der vorhergehenden Ansprüche, **dadurch gekennzeichnet, dass** die Moduleinheiten (2) in mindestens zwei, vorzugsweise mehreren, im Wesentlichen parallelen Reihen (R₁, R₂), jeweils gebildet durch eine Gerade, auf welcher die Mittelpunkte bzw. Drehpunkte (D) der einzelnen Modulelemente im Wesentlichen liegen, angeordnet sind, wobei die einzelnen Moduleinheiten zweier benachbarter Reihen vorzugsweise versetzt angeordnet sind, insbesondere in der Weise, dass die Mittelpunkte zweier benachbarter Moduleinheiten einer Reihe mit einem Mittelpunkt einer Moduleinheit einer benachbarten Reihe ein im Wesentlichen gleichschenkliges Dreieck bilden.

5. Solaranlage (1) nach einem der vorhergehenden Ansprüche, **dadurch gekennzeichnet, dass** die Länge einer Moduleinheit (2) geringer ist, vorzugsweise um ca. 10 % bis 20 % geringer ist, als der Abstand zwischen den Mittelpunkten zweier benachbarter Moduleinheiten (2) einer Reihe.

6. Solaranlage (1) nach einem der vorhergehenden Ansprüche, **dadurch gekennzeichnet, dass** der Abstand zwischen den Mittelpunkten zweier benachbarter Moduleinheiten (2) einer Reihe (R₁) in etwa dem Abstand zwischen zwei benachbarten Rohen (R₁, R₂) entspricht.

7. Solaranlage (1) nach einem der vorhergehenden Ansprüche, **dadurch gekennzeichnet, dass** die einzelnen Moduleinheiten (2) der Sonne im Wesentlichen gleichmäßig nachführbar sind und zu diesem Zweck vorzugsweise miteinander gekoppelt sind.

8. Solaranlage (1) nach einem der vorhergehenden Ansprüche, **dadurch gekennzeichnet, dass** die Moduleinheiten (2) derart aufgestellt sind, dass sie mit einer Waagrechten einen Winkel von ca. 20° bis ca. 80°, vorzugsweise von ca. 30° bis ca. 45°, besonders bevorzugt von ca. 35° bis 40°, einschließen.

9. Solaranlage (1) nach einem der vorhergehenden Ansprüche, **dadurch gekennzeichnet, dass** eine Bauhöhe von 2,5 m nicht überschritten wird.

10. Solaranlage (1) nach einem der vorhergehenden Ansprüche, **dadurch gekennzeichnet, dass** benachbarte Solarmodule (3) einer Moduleinheit (2) mit Abstand zueinander angeordnet sind.

11. Solarmoduleinheit (2), **dadurch gekennzeichnet, dass** sie länglich ausgebildet und der Sonne nachführbar ist.

12. Solarmoduleinheit (2) nach Anspruch 11, **dadurch gekennzeichnet, dass** sie im Wesentlichen rechteckig ausgebildet ist.

13. Solarmoduleinheit (2) nach einem der Ansprüche 11 oder 12, **dadurch gekennzeichnet, dass** sie ein Verhältnis von Breite zu Länge im Bereich von ca. 1 : 1,5 bis 1 : 10, vorzugsweise ca. 1:2 bis 1:5, besonders bevorzugt von ca. 1 : 3, aufweist.

14. Verfahren zum Anordnen von Solarmoduleinheiten (2), insbesondere von Solarmoduleinheiten nach einem der Ansprüche 11 - 13, zur Installierung einer Solaranlage (1), insbesondere einer Solaranlage nach einem der Ansprüche 1 - 10, umfassend folgenden Arbeitsschritt:
Positionieren der Drehachsen der einzelnen Moduleinheiten in mindestens zwei im Wesentlichen parallele Reihen, wobei die Drehachsen der Moduleinheiten zweier benachbarter Reihen derart versetzt angeordnet werden, dass zwei benachbarte Drehachsen einer Reihe mit einer Drehachse einer nächstgelegenen Moduleinheit der anderen Reihe ein im Wesentlichen gleichschenkliges Dreieck bilden, wobei die Abstände der Modulelemente untereinander so gewählt werden, dass ein Berühren der Moduleinheiten beim Drehen um die Drehachsen ausgeschlossen ist, wobei die Moduleinheiten so aufgestellt werden, dass sie mit einer Waagrechten einen spitzen Winkel, vorzugsweise einen Winkel von ca. 35 - 42 °, einschließen, wobei der Abstand der Reihen so gewählt wird, dass eine gegenseitige Verschattung der Solarmodule im Tagesverlauf im Wesentlichen vermieden wird, und wobei die einzelnen Moduleinheiten im Wesentlichen gleichmäßig dem Sonnenverlauf nachgeführt werden.
